(19) Europäisches Patentamt
European Patent Office
Office européen des brevets

(11) **EP 1 808 256 A1**

(12) **EUROPEAN PATENT APPLICATION**

(43) Date of publication:
**18.07.2007 Bulletin 2007/29**

(51) Int Cl.:
***B23K 9/022*** (2006.01)   ***B23K 9/30*** (2006.01)

(21) Application number: **07000529.3**

(22) Date of filing: **11.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.01.2006 JP 2006008637**

(71) Applicant: **Kabushiki Kaisha Kobe Seiko Sho (Kobe Steel, Ltd.)**
**Kobe-shi,**
**Hyogo 651-8585 (JP)**

(72) Inventors:
• **Koshiishi, Fusaki**
**Fujisawa Plant in Kobe Steel Ltd**
**Fujisawa-shi**
**Kanagawa 251-0014 (JP)**

• **Chen, Liang**
**Fujisawa Plant in Kobe Steel Ltd**
**Fujisawa-shi**
**Kanagawa 251-0014 (JP)**
• **Suzuki, Keiichi**
**Fujisawa Plant in Kobe Steel Ltd.**
**Fujisawa-shi**
**Kanagawa 251-0014 (JP)**

(74) Representative: **Müller-Boré & Partner**
**Patentanwälte**
**Grafinger Strasse 2**
**81671 München (DE)**

(54) **Method and apparatus for welding using consumable electrode**

(57)   Welding is carried out using a consumable electrode while applying to a welding wire a vibration at a frequency of 500 Hz or more and an amplitude of 0.01 to 0.5 mm. The vibration is preferably applied in a direction crossing the feeding direction of the welding wire. A vibration under these conditions is preferably applied to a tip of the welding wire by using the forced vibration or resonance of the welding torch or the resonance of the welding wire itself.

**F I G . 1**

**(Cont. next page)**

# F I G . 2

**Description**

BACKGROUND OF THE INVENTION

1. Field of the Invention

The present invention relates to methods for welding using a consumable electrode and to welding apparatuses for use in the methods. Specifically, it relates to methods for $CO_2$ gas shield arc welding using a consumable electrode and to welding apparatuses for use in the methods.

2. Description of the Related Art

Carbon dioxide ($CO_2$) welding is one of techniques for gas shield arc welding using a consumable electrode and uses $CO_2$ gas as a shielding gas. The $CO_2$ welding technique is widely used in various fields, because the technique uses an inexpensive shielding gas and provides a good penetration shape.

This technique, however, induces large spatters in $CO_2$ welding at medium or high welding currents of 250 amperes or more. In particular, it induces large spatters more with an increasing lead angle of a welding torch.

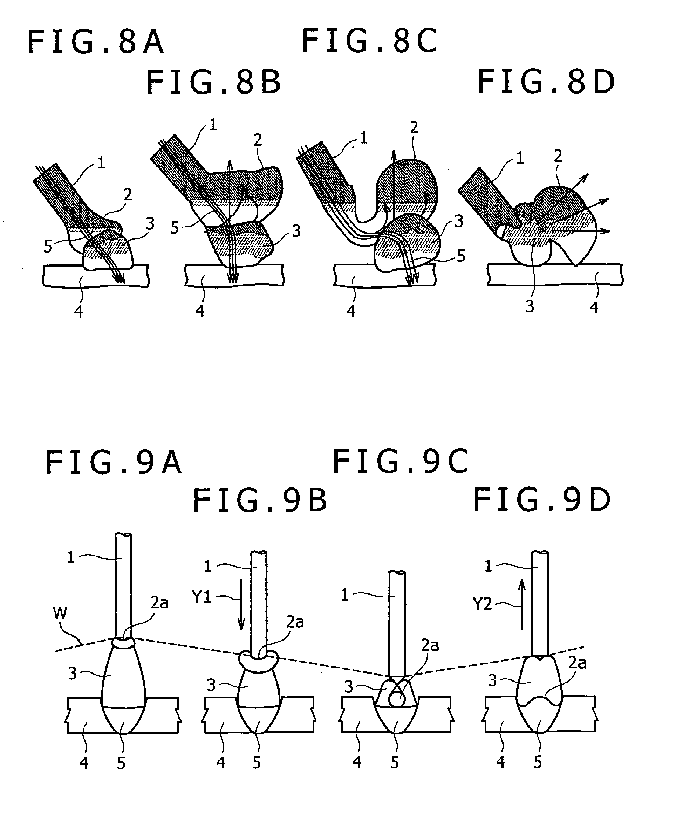

FIGS. 8A, 8B, 8C, and 8D schematically illustrate a mechanism of occurrence of spatters. The stages (Stages A to D) are sequentially illustrated with a varying shape of an arc, in which a molten fusion zone is formed in a wire tip and leaves therefrom, in the case where the lead angle of the welding torch is 30°. In Stage A, the head of a wire 1 is melted by the action of Joule's heat and an arc 3 to thereby form a droplet 2 at the wire tip (FIG. 8A). In Stage B, the droplet 2 at the wire tip develops, and a current passes through the wire 1, the droplet 2, the arc 3, and a base metal in this order. The current, however, does not always pass through these components in a straight path and may often pass in a curved path. The droplet then curves upward with an axis being a fusion zone adjacent to the wire tip (Stage C; FIG. 8C) . This bending is caused by a reactive force of the arc 3 generated below the droplet 2, an upward electromagnetic force due to the curved path of current, and the convection of the droplet itself. Next, in Stage D, the droplet leaves from the axis at a position having the smallest diameter by the action of the electromagnetic pinch force and by gravitation. The droplet is abruptly freed from the constraint by the wire and is driven to the outside of a molten pool by the action of an upward inertial force. When another arc is generated, the wire is driven by the action of the reactive force of the other arc to form a large spatter. In addition, droplets leave from the wire irregularly, because the position of the axis of bending (curve) of droplets may often vary or shift typically depending on the direction of the electromagnetic force. This irregularity is probably one of causes of spatters. Specifically, spatters may be fundamentally caused by the upward motion of droplets and the irregularity of droplets leaving in $CO_2$ welding carried out at medium and high welding currents.

Investigations on improvements of welding wires and welding power supplies have been made to avoid such occurrence of spatters in $CO_2$ welding. However, no significant improvements have been made to suppress the occurrence of spatters and reduce cost in $CO_2$ welding. Some improvements in welding process have been attempted. However, few of them relate to suppression of the occurrence of spatters, and most of them relate to reduction of adverse effects of spatters once occurred. These improvements in welding process have served to reduce the adverse effects of spatters to some extent, but significant improvements have not yet been obtained. Some attempts in welding process to suppress the occurrence of spatters in the related art will be illustrated below.

Japanese Patent Laid-Open No. 2003-10970 describes a technique for preventing large spatters by feeding a vibration to a wire in an axial direction thereof to thereby facilitate droplets to leave from the wire tip. FIGS. 9A, 9B, 9C, and 9D are diagrams illustrated in FIG. 11 of this publication. FIGS. 9A, 9B, 9C, and 9D schematically illustrate a mechanism of occurrence of spatters. The stages (Stages A to D) are sequentially illustrated with a varying shape of an arc, in which a molten fusion zone is formed in a wire tip and leaves therefrom. In Stage A, the head of a wire 1 is melted to form a fusion zone 2a, and a welding bead 5 is formed in a work 4 by the actions of Joule' s heat and an arc 3 (FIG. 9A) . In Stage B, the welding wire 1 moves downward toward the work 4, and a downward inertial force is thereby applied to the fusion zone 2a at the wire tip (FIG. 9B). Next, the fusion zone 2a smoothly leaves from the head of the welding wire 1 and reaches a molten pool due to the applied inertial force at the time when the welding wire 1 pauses (Stage C; FIG. 9C) or returns upward (Stage D; FIG. 9D). This publication (Japanese Patent Laid-Open No. 2003-10970) mentions that the leaving of droplets can be carried out more reliably by increasing the welding current in Stage D. Such an increased welding current acts in combination with the electromagnetic pinch force. Stage D is a turning point of vibration of the wire in which the fusion zone 2a at the wire tip grows to a suitable extent.

SUMMARY OF THE INVENTION

Such techniques in the related art, however, have the following disadvantages. According to the technique described in Japanese Patent Laid-Open No. 2003-10970, the welding wire is allowed to oscillate in its axial direction, and vibrations are applied at intervals identical to the intervals of droplet transfer (droplet leaving). The wire vibrates from a macroscopic view within, for example, one minute. However, droplets sequentially leave from the wire at very short time intervals of, for example, 20 milliseconds. The wire vertically oscillates only once but does not vibrate in such a very short time period. When a continuous vibration as a continuous vertical motion without pausing is applied to the wire, the speed of the vertical motion of the wire is too slow as compared with the melting speed of the wire tip. Accordingly, the vertical motion fails to apply a downward inertial force to the fusion zone at the wire tip. In addition, the upward motion of the fusion zone at the wire tip is not stopped. The upward motion causes spatters to occur. Such microscopic motions may be observed by observing the object in a short time period between the leaving of one droplet and the leaving of another using a high-speed video camera. In contrast, a droplet may more easily leave from the wire tip if a vertical motion is applied momentarily to the wire at the same instant when the droplet leaves from the wire. However, it is very difficult to apply the vibration at the exact timing. In addition, the occurrence of large spatters may not be suppressed even if the vibration may be applied at the exact timing and the vibration enables the droplet to leave from the wire. This is because the fusion zone at the wire tip has begun its upward motion before the application of the vibration. In pulsed welding, a vibration is applied to the wire at the same time when a peak current is detected. However, a fusion zone at the wire tip does not leave from the wire unless the vibration is applied at a timing when the droplet is just about to leave. In short, it is difficult to suppress the occurrence of spatters according to the technique described in the publication. In addition, it is difficult to apply the technique described in the publication to semi-automatic welding, in which welding is carried out while holding a welding torch typically by hand. This is because the technique has been developed as a technique for automatic welding, in which welding is carried out while a welding torch is fixed typically to a carriage. Such semiautomatic welding processes, however, occupy eight-tenths or more of $CO_2$ welding processes carried out at medium and high welding currents.

The present invention addresses the above-identified, and other problems associated with techniques in the related art. It is therefore desirable to provide a method and an apparatus for welding using a consumable electrode, which may suppress the occurrence of spatters, even in semiautomatic and other $CO_2$ welding processes.

According to an embodiment of the present invention, there is provided a method of welding using a consumable electrode, the method including the step of carrying out welding while applying to a welding wire a vibration at a frequency of 500 Hz or more and an amplitude of 0.01 to 0.5 mm.

According to an embodiment of the present invention, the vibration is preferably applied in a direction crossing the feeding direction of the welding wire. The direction crossing the feeding direction is not limited to a vertical direction to the feeding direction. A vibration under the vibration condition is preferably applied to a tip of the welding wire using at least one selected from the group consisting of forced vibration of a welding torch, resonance of the welding torch, and resonance of the welding wire itself.

According to another embodiment of the present invention, there is provided an apparatus for welding using a consumable electrode, which includes a handle, a torch, and a vibration exciter. The torch is configured to feed a welding wire therethrough. The vibration exciter is arranged between the handle and the torch and is configured to apply to the torch a vibration in a direction crossing the feeding direction of the welding wire to thereby apply a vibration to the welding wire fed through the torch. In the apparatus, vibration to be applied to the welding wire fed through the torch has a frequency of 500 Hz or more and an amplitude of 0.01 to 0.5 mm.

In the apparatus, the vibration is preferably applied in a direction crossing the feeding direction of the welding wire. The vibration exciter may be configured to apply a vibration to the torch electromagnetically, or may be configured to apply a vibration to the torch using a multilayer piezoelectric element.

According to yet another embodiment of the present invention, there is provided an apparatus for welding using a consumable electrode, which includes a torch and a vibrator. The torch is configured to feed a welding wire therethrough. The vibrator has a vibration connector and is connected to the torch via the vibration connector. The vibrator is configured to apply to the torch a vibration in a direction crossing the feeding direction of the welding wire to thereby apply a vibration to the welding wire fed through the torch. In this apparatus, the vibration to be applied to the welding wire fed through the torch has a frequency of 500 Hz or more and an amplitude of 0.01 to 0.5 mm.

The vibration is also preferably applied in a direction crossing the feeding direction of the welding wire in this apparatus. In a preferred embodiment, the torch includes a damper section, and the vibration connector of the vibrator is connected to the torch at a position between the damper section and the head of the torch, and the apparatus further includes a resonance mechanism, the resonance mechanism including a support and a spring. The support is fixed to the torch at a position between the damper section and the tail of the torch. The spring is supported by the support and pressed toward a pos ition between the damper section and the head of the torch.

In an apparatus according to an embodiment of the present invention, the vibration is preferably applied to a tip of the welding wire using at least one selected from forced vibration of the welding torch, resonance of the welding torch, and resonance of the welding wire.

According tomethods and apparatuses according to embodiments of the present invention, the occurrence of spatters can be suppressed typically in $CO_2$ welding carried out at medium and high welding currents. In the methods and apparatuses, a microvibration at a high frequency is applied to a wire and a fusion zone (droplet) at the wire tip. This mitigates the upward bending of the wire with a fusion zone adjacent to the wire tip being an axis. The resulting droplets can smoothly and regularly leave from the wire tip. The methods and apparatuses can use a down-sized welding torch and can be applied not only to automatic welding but also to semiautomatic welding. In automatic welding, welding is carried out typically using a robot or dedicated machine while the welding torch is fixed. In semiautomatic welding, welding is carried out while a welding torch is held typically by hand.

BRIEF DESCRIPTION OF THE DRAWINGS

FIG. 1 is an outside drawing of a welding torch for use in a first embodiment of the present invention;
FIG. 2 is a cross-sectional view of a vibration exciter of the welding torch in FIG. 1;
FIGS. 3A, 3B, and 3C show a welding apparatus and modifications thereof according to a second embodiment of the present invention;
FIG. 4 is an outside drawing of a welding torch for use in a third embodiment of the present invention;
FIG. 5 is a cross-sectional view of a vibration exciter of the welding torch in FIG. 4;
FIGS. 6A and 6B are views of a welding apparatus according to a fourth embodiment of the present invention;
FIGS. 7A and 7B are views of a modification of a welding apparatus according to a fourth embodiment of the present invention;
FIGS. 8A, 8B, 8C, and 8D show the mechanism of occurrence of spatters; and
FIGS. 9A, 9B, 9C, and 9D are diagrams shown in FIG. 11 of JP-A No. 2003-10970.

DESCRIPTION OF THE PREFERRED EMBODIMENTS

Some embodiments of the present invention will be illustrated with reference to the attached drawings. According to an embodiment of the present invention, an electrodynamic vibration exciter (vibrator) is used as a device for generating vibrations. The vibration exciter may be integrated into a welding torch and used in semiautomatic welding. Alternatively, it may have a vibration connector, be fixed to a welding torch main body via the vibration connector and used in automatic welding using a welding robot.

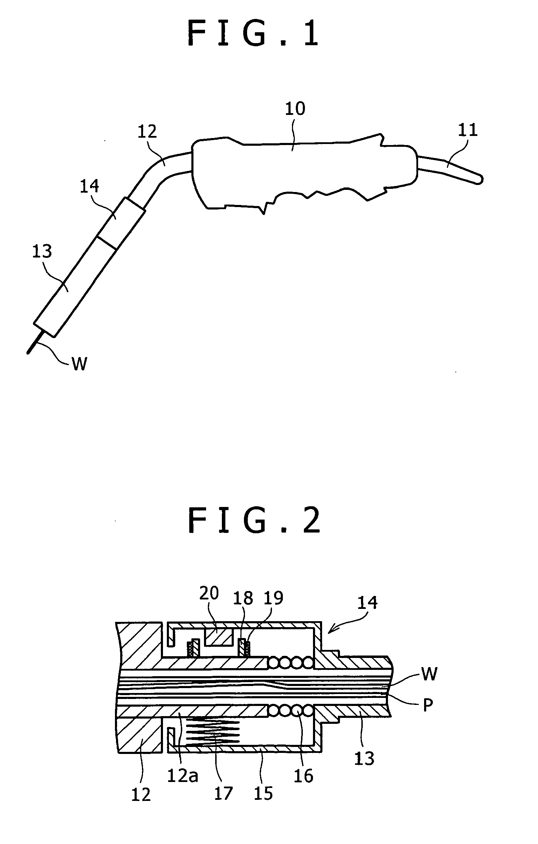

FIGS. 1 and 2 are an outer diagram of a welding torch and a cross-sectional view of a vibration exciter in the welding torch, respectively, for use in a method of welding using a consumable electrode according to a first embodiment of the present invention. With reference to FIG. 1, a handle 10 is connected via a flexible cable 11 to a welding power supply (not shown). A solid and slightly curved pipe 12 is attached to the head of the handle 10. An electrically-driven vibrator 14 is connected to the head of the pipe 12, and a torch 13 is arranged at the head of the electrically-driven vibrator 14. A pipe P is arranged inside the cable 11, the handle 10, the pipe 12, the vibrator 14 and the torch 13. A welding wire W is guided inside the pipe P and fed to a work from the head of the torch 13.

According to this embodiment, the welding wire W is vibrated. Specifically, an apparatus or device capable of generating a reciprocating displacement and force is integrated with a welding torch, and a vibration of the welding torch is transferred to the welding wire. Piezoelectric elements and linear motors, for example, canbe used as the apparatus or device capable of generating a reciprocating displacement. Such piezoelectric elements and linear motors have very small sizes and vibrate strongly at high frequencies.

In the vibrator 14 according to this embodiment, an extension 12a of the pipe 12 is arranged in a housing 15 of the vibrator 14. The extension 12a is arranged coaxially with the housing 15. An edge of the extension 12a near to the torch 13 is fixed via a spring 16 to a terminal inner surface of the housing 15. A spring 17 is arranged between the extension 12a and an intermediate inner surface of the housing 15. A cylindrical shank 18 is vertically arranged on the outer surface of the extension 12a, and a coil 19 is wound around the shank 18. A permanent magnet 20 is arranged on the inner surface of the housing 15. The permanent magnet 20 is arranged so as to come into the shank 18 but not in contact with the shank 18.

The vibrator 14 having the configuration is used in a welding apparatus according to this embodiment. When a high-frequency current is applied to the coil 19, a magnetic field is generated in the coil 19. Magnetic force then is generated between the magnetic field and an electromagnet, and this applies repeating reciprocating (inverting) stress in an axial direction of the torch 13. The torch 13 thereby vibrates at a high frequency in a direction crossing its axial direction. Specifically, with reference to FIG. 2, the pipe 12 and the extension 12a, shank 18, and coil 19 integrated therewith are fixed, and the torch 13, the housing 15, and the integrated permanent magnet 20 are movable. When positive and negative electricities are alternately fed to the coil 19, the electromagnetic force changes its direction vertically along a direction perpendicular to the axis of the torch 13. Then withdrawing force and expelling force caused by the electromagnetic force are applied to the permanent magnet 20, and the permanent magnet 20 vertically vibrates in a direction perpendicular to the axis of the torch 13. As the permanent magnet 20 is fixed to the torch 13, the entire torch 13 vibrates in a direction perpendicular to its axial direction. Thus, a high-frequency vibration is applied to the welding wire W in a direction crossing its axial direction. The welding wire W is fed from the torch 13.

Thus, a vibration can be applied to the welding wire by applying an external vibration to the welding torch 13. According to this embodiment, the electrically-driven vibrator 14 can operate at frequencies in a wide-range from low frequencies to high frequencies. In addition, the electrically-driven vibrator 14 has a small size. Accordingly, when the electrically-driven vibrator 14 is integrated into a welding torch as illustrated in FIGS. 1 and 2, the resulting welding torch can have a vibration function and have a reduced size. Accordingly, the welding torch can be applied not only to automatic welding using a robot or a dedicated automatic welding machine but also to semiautomatic welding in which welding is carried out while the welding torch is held by hand.

Welding methods and welding apparatuses according to embodiments of the present invention relate to reduction of spatters in welding such as $CO_2$ welding. Specifically, welding is carried out while vibrating a welding wire under specific vibration conditions. The vibration of the welding wire propagates to a fusion zone adjacent to the wire tip, and the fusion zone adjacent to the wire tip thereby vibrates at the same frequency, the same phase, and substantially the same amplitude as the welding wire. The vibration of the fusion zone adjacent to the wire tip thenpropagates to an entire droplet. The vibration of the entire droplet has a substantially equal frequency but a somewhat smaller amplitude as compared with the vibration of the fusion zone adjacent to the wire tip. A very large inertial force is generated, because the droplet vibrates at a high frequency. The inertial force reciprocates at a frequency equal to the vibration frequency of the wire. The reciprocating motion takes the axis of the wire as its center. The high-frequency reciprocating inertial force facilitates the growth of the droplet in the axial direction of the wire. When the droplet grows in the axial direction of the wire, the current passes in a relatively linear route, the electromagnetic force bends less, and the upward motion of the droplet is further reduced. In addition, the fusion zone adjacent to the wire tip has an inertial force larger than that of the entire droplet, because the vibration of the fusion zone adjacent to the wire tip has an amplitude somewhat larger than that of the entire droplet, as mentioned above. This makes droplets easily and regularly leave from the fusion zone adjacent to the wire tip. Thus, the occurrence of spatters can be suppressed.

The occurrence of spatters can be suppressed by using the welding torch and welding method according to embodiments of the present invention. However, spatters may increase in some cases unless the vibration of the welding wire is carried out under suitable vibration conditions. In other words, the frequency and amplitude of the vibration of wire are very important parameters. Next, how these parameters are specified according to embodiments of the present invention will be illustrated below.

The wire is vibrated at a frequency of 500 Hz or more in a direction crossing the axial direction in a welding torch and a welding method according to embodiments of the present invention. If the vibration frequency is less than 500 Hz in a direction crossing the axial direction of wire, the inertial force of the droplet may become too small to conquer the upward reactive force of arc, convection, and electromagnetic force and to suppress the upwardmotion of the droplet. Why the inertial force decreases with a decreasing vibration frequency will be illustrated below. Following Mathematical Expressions 1 and 2 are basic physical expressions:

$$a = D(2\pi f)^2 \qquad (1)$$

wherein "a" represents the acceleration; "D" represents the amplitude; and "f" represents the vibration frequency;

$$F = ma \qquad (2)$$

wherein "F" represents the inertial force; and "m" represents the mass of droplet.

Mathematical Expressions 1 and 2 demonstrate that the acceleration and the inertial force decrease with a decreasing vibration frequency, assuming that the vibration amplitude and mass of the droplet are constant. The reason why a vibration should be carried out at a high frequency has been described from the viewpoint of the inertial force. In addition, the reciprocating speed (vibration speed) of the wire should be higher than the speed of upward motion of the droplet, from the viewpoint of the relation between the two speeds. The droplet moves upward at a speed of about two times per five milliseconds. In other words, the droplet moves upward at a frequency of about 400 Hz. This can be observed by observing the formation of a droplet at wire tip using a high-speed video camera. Accordingly, the vibration frequency of wire may be set at 400 Hz or more in order to suppress the upward motion of the droplet. Intensive investigations and experiments have revealed that the lower limit of the vibration frequency is preferably set at 500 Hz.

The welding wire is vibrated at an amplitude of 0.01 mm to 0.5 mm according to an embodiment of the present invention. If the amplitude of vibration of the welding wire is less than 0.01 mm, the inertial force may be too small to conquer the upward reactive force of arc, convection, or electromagnetic force and to suppress the upward motion of the droplet. The inertial force decreases with a decreasing amplitude of vibration of the welding wire probably for the following reason. Mathematical Expressions 1 and 2 demonstrate that the acceleration and the inertial force decrease with a decreasing vibration amplitude D, assuming that the vibration frequency and the mass of droplet are constant. This demonstrates that a minimum amplitude should be specified from the viewpoint of the intensity of the inertial force. The amplitude maybe decreased if a sufficient inertial force is ensured by increasing the vibration frequency. At an excessively small amplitude, however, the vibration of the wire may not sufficiently propagate to the fusion zone at the wire tip and to the entire droplet. In this case, the droplet may not vibrate although the wire vibrates at a small amplitude. Accordingly, a minimum amplitude shouldbe specified. In contrast, spatters may increase at an executively large amplitude. A vibration transfers from the wire to a fusion zone adj acent to the wire tip at a significantly high transfer function than that to the entire droplet. Accordingly, the amplitude of the fusion zone adjacent to the wire tip is amplified at a larger magnitude than that of the entire droplet. This increases the differences between inertial force and amplitude of the fusion zone adjacent to the wire tip and those of the entire droplet. When the differences and the intensity of the inertial force exceed certain limits, the droplet conquers its surface tension upon a metal and is driven beyond a molten pool. Thus, spatters increase. The largest or maximum amplitude of the wire may be set at 0.5 mm, so that the limits may not be exceeded.

The amplitude is preferably within a range from 0.01 mm to 0.5 mm. This has been found after intensive investigations and experiments.

A vibration method and a welding torch that satisfy the above vibration conditions are preferably employed according to embodiments of the present invention. The wire is vibrated under specific conditions according to an embodiment of the present invention by using a welding torch which has a device capable of generating a vibration or has a structure having a vibration function. The conditions are satisfied by using at least one of the forced vibration of the welding torch main body, the resonance of the welding torch main body, and the resonance of the wire extended or protruded from the welding tip. In this case, a vibration should be applied to the torch main body in order to induce a vibration of the wire. This may be carried out by integrating an apparatus or device capable of generating a vibration into the welding torch main body or by externally connecting the apparatus or device to the welding torch main body. In any case, the vibration of the apparatus or device capable of generating a vibration propagates to the welding torch and then to the welding wire.

If an apparatus or device can generate a vibration satisfying the specific vibration frequency and amplitude of the wire according to an embodiment of the present invention, it is enough to transfer the vibration to the welding torch and then to the wire without modification. However, it may be difficult to prepare an apparatus or device capable of generating a vibration at a frequency of 500 Hz or more and an amplitude of at least 0.01 mm, as specified in an embodiment according to the present invention. Even if the apparatus or device can be prepared, it may become expensive. Regular oscillators are known to produce a vibration at a decreasing amplitude with an increasing vibration frequency.

In this case, the specific amplitude according to an embodiment of the present invention can be satisfied at the wire tip by using the resonance of the welding torch main body and/or the resonance of the wire protruded from the welding tip, even without using an apparatus or device capable of generating a vibration at a high frequency and an amplitude of 0.01 mm or more. The "resonance" is a phenomenon in which the amplitude of an object is amplified larger than the amplitude of a vibration applied from a vibrator, when the applied vibration has a frequency identical to or near to the specific frequency of the object. When a vibration is applied using the resonance of the welding torchmainbody, the welding torchmaybe designed to have a specific frequency of 500 Hz or more. When a vibration is applied using the resonance of the wire protruded from the welding tip, the wire may vibrate at a large amplitude by the action of the resonance of the wire by applying a vibration from the vibrator at a vibration frequency identical to the specific frequency of the wire, although the amplitude of the vibration transferred from the vibrator to the wire is small. In this case, the wire protruded from the welding tip may have a specific frequency of 500 Hz or more in many cases.

A vibration at a frequency of 500 Hz or more and an amplitude of 0.01 to 0.5 mm can be applied to the welding wire by using the resonance of the welding torchmainbody in the welding apparatus according to a first embodiment illustrated in FIGS. 1 and 2.

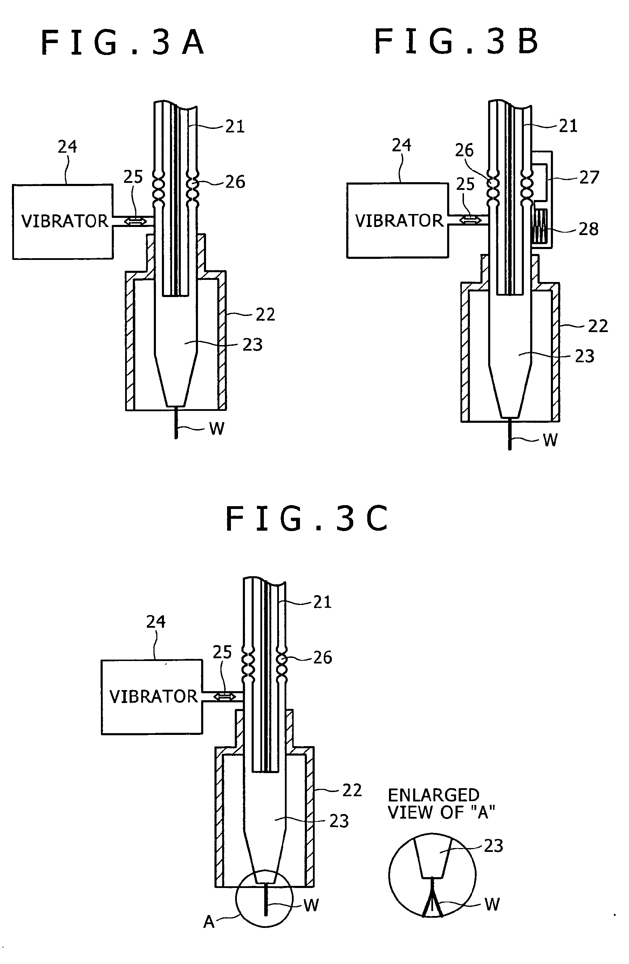

FIGS. 3A, 3B, and 3C are schematic views of welding apparatuses according to a second embodiment of the present invention, respectively. According to this embodiment, a vibration is applied to a welding torch, and the applied vibration is then transferred through a power supply tip to a welding wire W. In the welding apparatus shown in FIG. 3A, a vibration connector 25 of a vibrator 24 is fixed to a side surface of a welding torch main body 21. The welding torchmainbody 21 includes a head section and a tail section. The head section is connected to the tail section with the interposition of a vibration damper section 26. Consequently, a vibration from the vibrator 24 is transmitted not to the tail section but to the head section, which sections are separated by the damper section 26. A nozzle 22 is fitted onto an outer periphery of the head section of the welding torch main body 21. A power supply tip 23 is fixed to the head of the welding torch main body 21. A conduit liner is arranged in the welding torch main body 21. A welding wire W is fed through the conduit liner and delivered to a welding site from the head of the power supply tip 23.

In the welding apparatus having this configuration, a vibration is applied from the vibrator 24 via the vibration connector 25 to the head section of the welding torch main body 21. The vibration is then transferred to the power supply tip 23 and is then transferred from the power supply tip 23 to the welding wire W. The vibrator 24 preferably has a small size.' The vibrator 24 is preferably an electrically-driven vibrator capable of vibrating at a high frequency. An existing vibrator can be used as intact in a welding torch according to the second embodiment. The welding torch thereby has a simple structure.

FIG. 3B shows a modification of the apparatus shown in FIG. 3A. In the modification, a support 27 is fixed to a welding torch main body 21 at a position between a damper section 26 and the tail of a welding torch main body 21. A spring 28 is supported by the support 27 and is pressed to the welding torch main body 21 at a position between the damper section 26 and the head of the welding torch.

In the apparatus having this configuration according to a modification, the welding torch main body 21 has a specific frequency of 500 Hz or more and thereby has a resonance structure by the action of a spring 28 . By allowing the vibrator 24 to generate a vibration at a frequency equal to the specific frequency of the welding torch main body 21, resonance is generated in the welding torch main body 21, and a welding wire W and a power supply tip 23 vibrate at a large amplitude of 0.01 mm or more. Accordingly, the welding wire W can vibrate at an amplified amplitude of 0.01 mm or more by using the welding apparatus having this configuration, even by using a vibrator capable of producing a vibration at an amplitude of less than 0.01 mm.

FIG. 3C shows another modification of the welding apparatus. According to this modification, a welding wire W is vibrated at a large amplitude by using the resonance of the welding wire W protruded from a power supply tip 23, whereas the welding torch main body 21 is not modified. The welding wire W protruded from the power supply tip 23 has a high specific frequency of 500 Hz or more. Accordingly, the welding wire W can vibrate at a large amplitude of 0.01 mm or more by allowing a vibrator 24 to produce a vibration at a frequency equal to the specific frequency of the welding wire W to thereby cause the resonance of the welding wire W, although the vibration transferred to the welding wire W has a small amplitude.

As is described above, a vibration at a frequency of 500 Hz or more and an amplitude of 0.01 to 0.5 mm can be applied to the welding wire in the welding apparatuses according to the second embodiment shown in FIGS. 3A, 3B, and 3C, by using the resonance of the welding torch main body 21 or the resonance of the welding wire W.

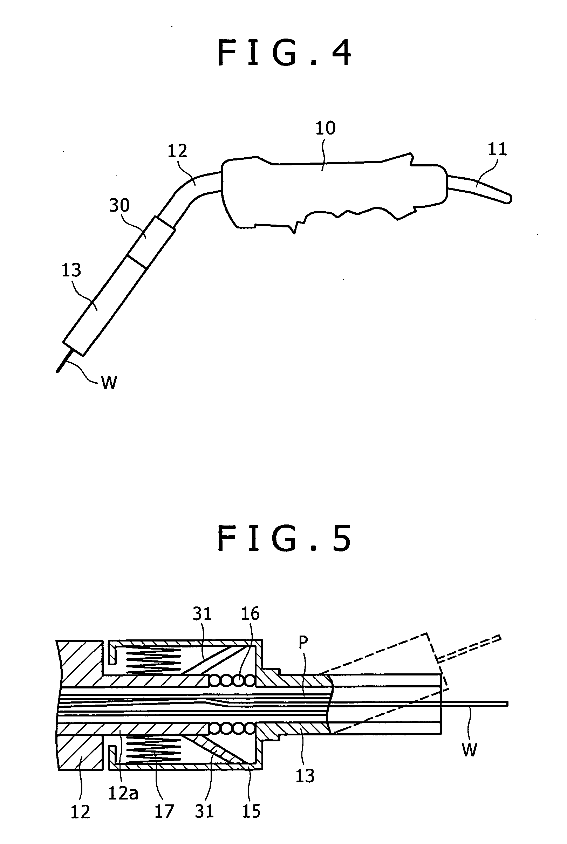

FIGS. 4 and 5 are a view of a welding apparatus and a cross-sectional view of a vibration exciter in the apparatus, respectively, according to a third embodiment of the present invention. The welding apparatus according to the third embodiment has the same configuration as the apparatus according to the first embodiment shown in FIGS. 1 and 2, except for the structure of a vibration exciter 30. The other components of the apparatus having the same configuration as in the first embodiment have identical reference numerals as in the first embodiment, and the detailed description thereof will be omitted. The vibration exciter 30 for use in an apparatus according to the third embodiment includes a housing 15, in which an extension 12a of a pipe 12 is supported by a spring 17 and a spring 16. A multilayer piezoelectric element 31 is arranged between the inner surface of the housing 15 and the extension 12a. The multilayer piezoelectric element 31 includes an assemblage of piezoelectric elements (multilayer piezoelectric element) so as to have a large total amplitude. A piezoelectric phenomenon is used in the vibrator, in which piezoelectric elements constituting the multilayer piezoelectric element 31 elongate upon application of a voltage. A vibrator using the multilayer piezoelectric element 31 can produce vibrations at high frequencies and can have a very small size. The multilayer piezoelectric element 31 can have a largely amplified elongation (amplitude), because the element includes plural stacked piezoelectric elements, and, as a result, resonance occurs in the stacked multilayer structure. A very small-sized vibrating welding torch can be obtained by using these advantages of piezoelectric elements and by integrating the multilayer piezoelectric element into a welding torch as illustrated in FIGS. 4 and 5. In addition, the welding torch can be applied not only to automatic welding using a robot or a dedicated automatic welding machine but also to semiautomatic welding in which welding is carried out while the welding torch is held by hand.

A vibration at a frequency of 500 Hz or more and an amplitude of 0.01 to 0.5 mm can also be applied to a welding wire in the welding apparatus illustrated in FIGS. 4 and 5 by using the resonance of the welding torch main body.

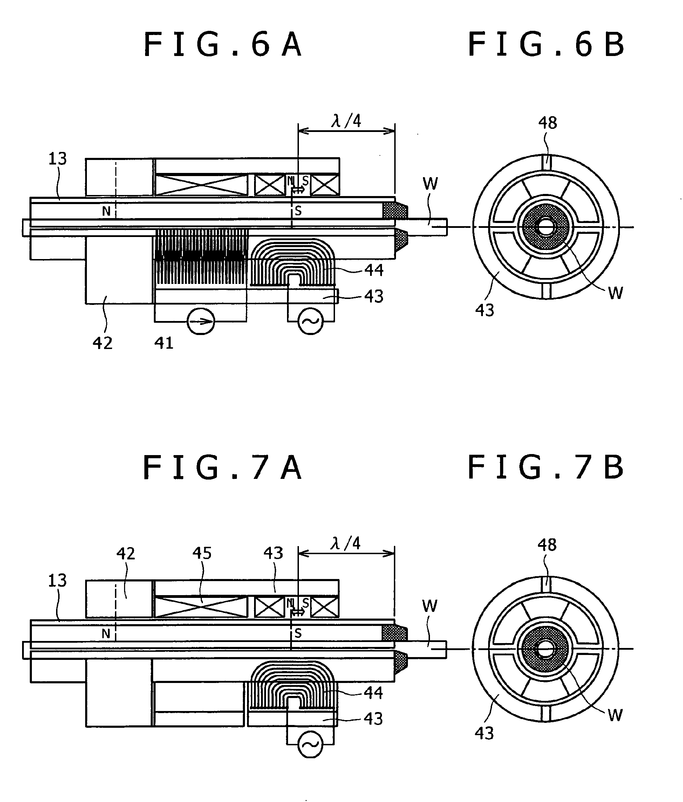

A welding apparatus according to a fourth embodiment of the present invention will be illustrated with reference to FIGS. 6A and 6B. According to the fourth embodiment, a vibration is directly applied to a welding wire by integrating an apparatus or device into a welding torch. The apparatus or device herein is capable of generating reciprocating displacement and force. With reference to FIGS. 6A and 6B, a magnetic substance 42 is arranged in a welding torch main body 13. A solenoid coil 41 and a saddle coil 44 are arranged in the magnetic substance 42 at a position near to the torch head. A cylindrical magnetic substance 43 having slits 48 is arranged so as to surround these solenoid coil 41 and saddle coil 44. The solenoid coil 41 and the magnetic substances 42 and 43 constitute an exciting circuit, and the exciting circuit magnetizes a welding wire W in a power supply tip. The saddle coil 44 is arranged in a pair with the solenoid coil 41. When an alternating current is supplied to the saddle coil 44 to produce an NS alternating magnetic field, the magnetized welding wire W vibrates in the NS alternating magnetic field.

FIGS. 7A and 7B show a modification of the apparatus illustrated in FIGS. 6A and 6B. In the modification, a permanent magnet 45 is arranged instead of the solenoid coil 41. In the modified apparatus, a welding wire W vibrates in an alternating magnetic field, as in the apparatus illustrated in FIGS. 6A and 6B.

Examples

The present invention will be illustrated in detail with reference to several examples and comparative examples below. Specifically, vibrations having different frequencies and amplitudes were applied to sample wires, spatters were observed, and the occurrences of spatters were determined. The frequencies and amplitudes of vibrations applied to wires were determined using a laser vibration meter. The occurrences of occurred spatters were determined using an electronic force balance.

Common welding conditions are as follows:

Wire: solid wire according to Japanese Industrial Standards (JIS) Z 3312 YGW11 (diameter of 1.2 mm)
Welding current: 320 amperes
Arc voltage: 38 V
Welding speed: 40 cm/min
Shielding gas: $CO_2$ (flow rate of 25 L/min)
Wire protrusion: 25 mm
Collecting time of spatters: 1 minute

The occurrences of spatters were evaluated by the following method.

As compared with the occurrence of spatters in a sample wherein no vibration is applied to a wire according to a welding method used in the related art, a sample showing a reduced occurrence of spatters by 50% or more is evaluated as "Excellent"; one showing a reduced occurrence of spatters by 25% or more and less than 50% is evaluated as "Good"; one showing a reduced occurrence of spatters by less than 25% is evaluated as "Poor"; and one showing a not decreasedbut an increased occurrence of spatters is evaluated as "Failure".

The results of the occurrences of spatters are shown in Tables 1 to 3 below. Tables 1 and 2 show the relationship between the occurrence of spatters and the vibration frequency, and Table 3 shows the relationship between the occurrence of spatters and the vibration amplitude, respectively.

Table 2 demonstrates that Examples 11 to 43 according to embodiments of the present invention are evaluated as "Excellent" or "Good". Vibrations at a frequency of 500 Hz or more were applied to the wires in these examples. Table 3 demonstrates that Examples 50 to 70 according to embodiments of the present invention are evaluated as "Excellent" or "Good". Vibrations at an amplitude of 0.01 to 0.5 mm were applied to the wires in these examples. In contrast, Comparative Examples 1 to 10 and Comparative Examples 44 to 49 and 71 to 76 are evaluated as "Failure" or "Poor" (Tables 1 and 3). In these comparative examples, vibration under the specific conditions as in the examples was not carried out.

Table 1

| | No. | Vibration frequency | Amplitude | Occurrence of spatters | Reduction of spatters | Evaluation |
|---|---|---|---|---|---|---|
| Com. Ex. | 1 | No vibration | | 7.8 | - | - |
| Com. Ex. | 2 | 200 Hz | 0.05 mm | 7.6 | 3% | Poor |
| Com. Ex. | 3 | | 0.15 mm | 6.9 | 12% | Poor |
| Com. Ex. | 4 | | 0.30 mm | 7.4 | 5% | Poor |
| Com. Ex. | 5 | 300 Hz | 0.05 mm | 7.5 | 4% | Poor |
| Com. Ex. | 6 | | 0.15 mm | 6.6 | 15% | Poor |
| Com. Ex. | 7 | | 0.30 mm | 6.9 | 12% | Poor |
| Com. Ex. | 8 | 400 Hz | 0.05 mm | 6.7 | 14% | Poor |
| Com. Ex. | 9 | | 0.15 mm | 5.9 | 24% | Poor |
| Com. Ex. | 10 | | 0.30 mm | 6.3 | 19% | Poor |

Table 2

| | No. | Vibration frequency | Amplitude | Occurrence of spatters | Reduction of spatters | Evaluation |
|---|---|---|---|---|---|---|
| Example | 11 | | 0.05 mm | 5.8 | 26% | Good |
| Example | 12 | 500 Hz | 0.15 mm | 5.4 | 31% | Good |
| Example | 13 | | 0.30 mm | 5.4 | 31% | Good |
| Example | 14 | | 0.05 mm | 5.1 | 35% | Good |
| Example | 15 | 600 Hz | 0.15 mm | 4.6 | 41% | Good |
| Example | 16 | | 0.30 mm | 4.8 | 38% | Good |
| Example | 17 | | 0.05 mm | 5.1 | 35% | Good |
| Example | 18 | 700 Hz | 0.15 mm | 4.2 | 46% | Good |
| Example | 19 | | 0.30 mm | 4.8 | 38% | Good |
| Example | 20 | | 0.05 mm | 4.9 | 37% | Good |
| Example | 21 | 800 Hz | 0.15 mm | 3.8 | 51% | Excellent |
| Example | 22 | | 0.30 mm | 4.3 | 45% | Good |
| Example | 23 | | 0.05 mm | 4.6 | 41% | Good |
| Example | 24 | 900 Hz | 0.15 mm | 3.5 | 55% | Excellent |
| Example | 25 | | 0.30 mm | 3.7 | 53% | Excellent |
| Example | 26 | | 0.05 mm | 4.6 | 41% | Good |
| Example | 27 | 1000 Hz | 0.15 mm | 3.4 | 56% | Excellent |
| Example | 28 | | 0.30 mm | 3.3 | 58% | Excellent |
| Example | 29 | | 0.05 mm | 4.6 | 41% | Good |
| Example | 30 | 1200 Hz | 0.15 mm | 3.5 | 55% | Excellent |
| Example | 31 | | 0.30 mm | 3.6 | 54% | Excellent |
| Example | 32 | | 0.05 mm | 4.5 | 42% | Good |
| Example | 33 | 1400 Hz | 0.15 mm | 3.4 | 56% | Excellent |
| Example | 34 | | 0.30 mm | 3.5 | 55% | Excellent |
| Example | 35 | | 0.05 mm | 4.5 | 42% | Good |
| Example | 36 | 1600 Hz | 0.15 mm | 3.4 | 56% | Excellent |
| Example | 37 | | 0.30 mm | 3.6 | 54% | Excellent |
| Example | 38 | | 0.05 mm | 4.8 | 38% | Good |
| Example | 39 | 1800 Hz | 0.15 mm | 3.6 | 54% | Excellent |
| Example | 40 | | 0.30 mm | 3.8 | 51% | Excellent |
| Example | 41 | | 0.05 mm | 4.6 | 41% | Good |
| Example | 42 | 2000 Hz | 0.15 mm | 3.2 | 59% | Excellent |
| Example | 43 | | 0.30 mm | 3.5 | 55% | Excellent |

Table 3

| | | Amplitude | Vibration frequency | Occurrence of spatters | Reduction of spatters | Evaluation |
|---|---|---|---|---|---|---|
| Com. Ex. | 44 | 0.005 mm | 500 Hz | 7.7 | 1% | Poor |
| Com. Ex. | 45 | | 1000 Hz | 7.5 | 4% | Poor |
| Com. Ex. | 46 | | 1600 Hz | 7.4 | 5% | Poor |
| Com. Ex. | 47 | 0.008 mm | 500 Hz | 6.6 | 15% | Poor |
| Com. Ex. | 48 | | 1000 Hz | 6.2 | 21% | Poor |
| Com. Ex. | 49 | | 1600 Hz | 5.9 | 24% | Poor |
| Example | 50 | 0.01 mm | 500 Hz | 5.8 | 26% | Good |
| Example | 51 | | 1000 Hz | 5.4 | 31% | Good |
| Example | 52 | | 1600 Hz | 5.2 | 33% | Good |
| Example | 53 | 0.05 mm | 500 Hz | 5.6 | 28% | Good |
| Example | 54 | | 1000 Hz | 4.7 | 40% | Good |
| Example | 55 | | 1600 Hz | 4.6 | 41% | Good |
| Example | 56 | 0.08 mm | 500 Hz | 5.3 | 32% | Good |
| Example | 57 | | 1000 Hz | 4.2 | 46% | Good |
| Example | 58 | | 1600 Hz | 4.1 | 47% | Good |
| Example | 59 | 0.1mm | 500 Hz | 5.2 | 33% | Good |
| Example | 60 | | 1000 Hz | 3.8 | 51% | Excellent |
| Example | 61 | | 1600 Hz | 3.5 | 55% | Excellent |
| Example | 62 | 0.2 mm | 500 Hz | 5.1 | 35% | Good |
| Example | 63 | | 1000 Hz | 3.4 | 56% | Excellent |
| Example | 64 | | 1600 Hz | 3.5 | 55% | Excellent |
| Example | 65 | 0.3 mm | 500 Hz | 5.4 | 31 % | Good |
| Example | 66 | | 1000 Hz | 3.6 | 54% | Excellent |
| Example | 67 | | 1600 Hz | 3.4 | 56% | Excellent |
| Example | 68 | 0.5 mm | 500 Hz | 5.8 | 26% | Good |
| Example | 69 | | 1000 Hz | 5.7 | 27% | Good |
| Example | 70 | | 1600 Hz | 5.8 | 26% | Good |
| Com. Ex. | 71 | 0.6 mm | 500 Hz | 7.1 | 9% | Poor |
| Com. Ex. | 72 | | 1000 Hz | 6.9 | 12% | Poor |
| Com. Ex. | 73 | | 1600 Hz | 6.8 | 13% | Poor |
| Com. Ex. | 74 | 0.7 mm | 500 Hz | 7.4 | 5% | Poor |
| Com. Ex. | 75 | | 1000 Hz | 7.6 | 3% | Poor |
| Com. Ex. | 76 | | 1600 Hz | 8.4 | -8% | Failure |

The methods and apparatus for welding with wire vibration according to embodiments of the present invention can reliably reduce the occurrence of spatters can be reliably reduced as compared with welding techniques in the related art. Accordingly, the methods and apparatuses are industrially useful.

It should be understood by those skilled in the art that various modifications, combinations, sub-combinations and alternations may occur depending on design requirements and other factors insofar as they are within the scope of the appended claims or the equivalents thereof.

**Claims**

1.  A method of welding using a consumable electrode, the method comprising the step of:

    carrying out welding while applying to a welding wire a vibration at a frequency of 500 Hz or more and an amplitude of 0.01 to 0.5 mm.

2.  The method according to Claim 1, wherein the vibration is applied in a direction crossing the feeding direction of the welding wire.

3.  The method according to Claim 1 or 2, wherein the vibration is applied to a tip of the welding wire using at least one selected from the group consisting of forced vibration of a welding torch, resonance of the welding torch, and resonance of the welding wire.

4.  The method according to any one of the preceding Claims, wherein $CO_2$ gas shield arc welding is carried out as the welding.

5.  An apparatus for welding using a consumable electrode, comprising:

    a handle;
    a torch, the torch configured to feed a welding wire therethrough; and
    a vibration exciter arrangedbetween the handle and the torch, the vibration exciter configured to apply to the torch a vibration in a direction crossing the feeding direction of the welding wire to thereby apply a vibration to the welding wire fed through the torch,

    wherein the vibration to be applied to the welding wire fed through the torch has a frequency of 500 Hz or more and an amplitude of 0.01 to 0.5 mm.

6.  An apparatus for welding using a consumable electrode, comprising:

    a torch, the torch configured to feed a welding wire therethrough; and
    a vibrator having a vibration connector and being connected to the torch via the vibration connector, the vibrator configured to apply to the torch a vibration in a direction crossing the feeding direction of the welding wire to thereby apply a vibration to the welding wire fed through the torch,

    wherein the vibration to be applied to the welding wire fed through the torch has a frequency of 500 Hz or more and an amplitude of 0.01 to 0.5 mm.

7.  The apparatus according to Claim 5 or 6, wherein the vibration exciter is configured to apply a vibration to the torch electromagnetically.

8.  The apparatus according to Claim 5, wherein the vibration exciter is configured to apply a vibration to the torch using a multilayer piezoelectric element.

9.  The apparatus according to any one of Claims 5 to 8,
    wherein the torch includes a damper section, and the vibration connector of the vibrator is connected to the torch at a position between the damper section and the head of the torch, and
    wherein the apparatus further includes a resonance mechanism, the resonance mechanism including:

    a support fixed to the torch at a position between the damper section and the tail of the torch; and
    a spring supported by the support and pressed toward the torch at a position between the damper section and the head of the torch.

# FIG.1

# FIG.2

# FIG.3A

# FIG.3B

# FIG.3C

ENLARGED
VIEW OF "A"

# F I G . 4

# F I G . 5

EP 1 808 256 A1

## FIG.6A

## FIG.6B

## FIG.7A

## FIG.7B

FIG.8A          FIG.8C

     FIG.8B          FIG.8D

FIG.9A          FIG.9C

    FIG.9B          FIG.9D

European Patent
Office

**EUROPEAN SEARCH REPORT**

Application Number

EP 07 00 0529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 61 119381 A (TOYOTA MOTOR CORP) 6 June 1986 (1986-06-06) | 1-3,5,6 | INV. B23K9/022 B23K9/30 |
| Y | * abstract; figure 1 * | 4,7,8 | |
| Y | US 4 295 031 A (ROEN RICHARD A) 13 October 1981 (1981-10-13) * the whole document * | 4 | |
| Y | JP 08 132240 A (MITSUBISHI HEAVY IND LTD) 28 May 1996 (1996-05-28) * abstract; figure 1 * | 7,8 | |
| Y | US 5 281 789 A (MERZ ROBERT [US] ET AL) 25 January 1994 (1994-01-25) * column 6, line 45 - line 67 * | 7,8 | |

TECHNICAL FIELDS
SEARCHED      (IPC)

B23K

The present search report has been drawn up for all claims

| Place of search | Date of completion of the search | Examiner |
|---|---|---|
| The Hague | 27 March 2007 | Prelovac, Jovanka |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 00 0529

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2007

| Patent document cited in search report | | Publication date | Patent family member(s) | | Publication date |
|---|---|---|---|---|---|
| JP 61119381 | A | 06-06-1986 | JP | 1773781 C | 14-07-1993 |
| | | | JP | 4065746 B | 21-10-1992 |
| US 4295031 | A | 13-10-1981 | AU | 4848379 A | 08-01-1981 |
| JP 8132240 | A | 28-05-1996 | JP | 3364025 B2 | 08-01-2003 |
| US 5281789 | A | 25-01-1994 | NONE | | |

EPO FORM P0459

For more details about this annex : see Official Journal of the European Patent Office, No. 12/82

**EP 1 808 256 A1**

REFERENCES CITED IN THE DESCRIPTION

**Patent documents cited in the description**

- JP 2003010970 A